(19) Europäisches Patentamt
European Patent Office
Office européen des brevets

(11) **EP 1 478 948 B1**

(12) **EUROPÄISCHE PATENTSCHRIFT**

(45) Veröffentlichungstag und Bekanntmachung des Hinweises auf die Patenterteilung:
**19.12.2012   Patentblatt 2012/51**

(21) Anmeldenummer: **03706292.4**

(22) Anmeldetag: **06.02.2003**

(51) Int Cl.:
***G01V 3/08*** *(2006.01)*

(86) Internationale Anmeldenummer:
**PCT/DE2003/000340**

(87) Internationale Veröffentlichungsnummer:
**WO 2003/073131 (04.09.2003 Gazette 2003/36)**

(54) **VERFAHREN UND MESSGERÄT ZUR ORTUNG EINGESCHLOSSENER OBJEKTE**

METHOD AND MEASURING DEVICE FOR LOCATING ENCLOSED OBJECTS

PROCEDE ET APPAREIL DE MESURE POUR REPERER DES OBJETS RENFERMES DANS UN MILIEU

(84) Benannte Vertragsstaaten:
**DE ES FR GB IT**

(30) Priorität: **21.02.2002   DE 10207425**

(43) Veröffentlichungstag der Anmeldung:
**24.11.2004   Patentblatt 2004/48**

(73) Patentinhaber: **ROBERT BOSCH GMBH**
**70442 Stuttgart (DE)**

(72) Erfinder:
- **CLAUSS, Stefan**
  **70771 Leinfelden-Echterdingen (DE)**
- **SKULTETY-BETZ, Uwe**
  **70771 Leinfelden-Echterdingen (DE)**
- **HAASE, Bjoern**
  **70182 Stuttgart (DE)**

(56) Entgegenhaltungen:
WO-A-98/30921     US-A- 4 814 690
US-B1- 6 198 271     US-B1- 6 249 113

**Beschreibung**

Stand der Technik

Die Erfindung betrifft ein Verfahren bzw. ein Meßgerät zur Ortung von in einem Medium eingeschlossenen Objekten nach dem Oberbegriff des Anspruchs 1 bzw. des Anspruchs 13.

Ein solches Verfahren bzw. ein Meßgerät zur Durchführung dieses Verfahrens nutzt eine kapazitive Sensorvorrichtung, die ein Detektionssignal, beispielsweise in Form eines elektromagnetischen Feldes erzeugt, so dass das Detektionssignal das zu untersuchende Medium durchgreift, zumindest jedoch in ausreichendem Maße in das Medium eingreift. Ein in dem Medium eingeschlossenes Objekt beeinflußt das Detektionssignal, so dass durch eine Auswertung dieses Detektionssignals Informationen über ein in dem Medium eingeschlossenes Objekt gewonnen werden können.

Ein gattungsgemäßes Meßgerät, beispielsweise ein Studsensor detektiert ein in einem Medium eingeschlossenes Objekt durch die Änderung der elektrischen Kapazität seiner kapazitiven Sensorvorrichtung, welche das eingeschlossene Objekt erzeugt. Ein in einem Medium eingeschlossenes Objekt ändert die dielektischen Eigenschaften des Mediums, so dass ein in die Nähe des Objekts gebrachter Meßkondensator eine auf das Objekt zurückgehende Kapazitätsänderung bzw eine Änderung seiner Impedanz erfährt. Diese Kapazitätsänderung läßt sich beispielsweise durch den Verschiebestrom des Meßkondensators der kapazitiven Sensorvorrichtung messen.

Aus der US 6,249,113 B 1 ist ein kompakter, handgehaltener Studsensor bekannt, der zur Ortung eingeschlossener Objekte die Kapazitätsänderungen in einem Sensorschaltkreis detektiert, wenn das Meßgerät über eine Wand verfahren wird. Zur Anzeige des genauen Ortes an dem ein eingeschlossenes Objekt in dem Medium geortet wurde, besitzt das Meßgerät der US 6,249,113 B1 ein Array Von LEDs, welches pfeilförmig auf der Gehäuseoberfläche des Meßgerätes angeordnet ist. Wird ein Objekt von dem Meßgerät detektiert, so wird abhängig von der Signalstärke ein LED-Paar der pfeilförmigen LED-Anordnung auf dem Gehäuse des Meßgerätes aktiviert. Je näher man dem eingeschlossenen Objekt kommt, d.h. je stärker das vom Objekt erzeugte Detektionssignal ist, desto weiter wandern die aktivierten LEDs in die Pfeilspitze des LED Arrays. Befindet sich das Meßgerät letztendlich direkt über dem eingeschlossenen Objekt, so ist die Pfeilspitze des LED Arrays erleuchtet, so dass prinzipiell mit dem Meßgerät der US 6,249,113 B 1 eine Lokalisierung von in einem Medium, beispielsweise einer Wand, eingeschlossenen Objekten möglich ist. Nicht möglich ist mit dem in der US 6,249,113 B 1 offenbarten Vorrichtung zur Ortung in einem Medium eingeschlossener Objekte sowie dem zugrundeliegenden recht einfachen Verfahren eine Messung der Tiefe in der das Objekt eingeschlossen ist.

Die WO 94/04932 offenbart eine tragbare Vorrichtung zur Ortung hinter einer Oberfläche positionierter Gegenstände mit einem Sensor zur Detektion einer durch das Objekt hervorgerufenen zusätzlichen Kapazität, mit einer Auswerteeinheit für das Detektionssignal sowie mit einem Display zur Darstellung der Meßergebnisse. Das Meßgerät der WO 94/04932 besitzt darüber hinaus eine Vorrichtung, die es erlaubt die Sensorvorrichtung in einem hochsensitiven bzw. in einem weniger sensitiven Mode zu betreiben.

Die WO 94/04932 offenbart darüber hinaus ein Verfahren zur Bestimmung des Ortes eines hinter einer Oberfläche positionierten Objektes. Dazu wird das entsprechende Meßgerät über die zu untersuchende Wand verfahren. Der Sensor der WO 94/04932 hat die Möglichkeit einen Anstieg bzw. eine Verringerung der Dichte des Materials zu zensieren. Dies ermöglicht es der Anordnung, den Anwender beispielsweise darüber zu informieren, dass der Sensor falsch, beispielsweise direkt oberhalb eines Einschlusses kalibriert worden ist. Das zugrunde liegende Verfahren ermöglicht weiterhin, den Anwender davon in Kenntnis zu setzen, dass das untersuchte Medium zu dick bzw. zu dünn ist, ein eingeschlossenes Objekt zu detektieren.

Ein digitaler Speicher des Meßgerätes der WO 94/04932 ermöglicht es, das Kalibrierungsdaten so lange zu speichern, wie das Meßgerät eingeschaltet ist.

Aus der US 6,198,271 B 1 ist ein Studsensor bekannt, der zur Ortung von in einer Wand eingeschlossenen Objekten die Kapazitätsänderungen von drei, meßgerätintegrierten kapazitiven Sensoren detektiert, während der Sensor über die Wand verfahren wird. Ein Auswertungsschaltkreis überwacht die relativen Zeiten, die zur Aufladung der drei kapazitiven Elemente notwendig sind, so dass während der Sensor über die zu untersuchende Wand verfahren wird, Änderungen in den relativen Kapazitäten der drei Sensorelemente aufgrund einer vom eingeschlossenen Objekt verursachten Änderung der Dielektrizitätskonstanten des untersuchten Materials gemessen werden können. Die Vergleichsschaltung nutzt diese Änderungen in den gemessenen relativen Kapazitäten der einzelnen Sensorelemente um das eingeschlossene Objekt zu lokalisieren.

Das Meßgerät der US 6,198,271 B 1 weist eine Anzeige bestehend aus einer Mehrzahl von Anzeigeelementen auf, die derart mit der Auswerteeinheit des Meßgerätes verschaltet sind, dass nur diejenigen Elemente ein Signal anzeigen, die direkt oberhalb des georteten Objektes sich befinden. Auf diese Weise ist es möglich, das Meßgerät über dem georteten Objekt zu zentrieren und das Objekt dadurch indirekt zu lokalisieren.

Aus der WO 98/30921 ist ein Magnetometer und Dielektrometer zur Detektion von im Untergrund verborgenen Objekten bekannt Bei dem Verfahren der WO 98/30921 wird ein Sensor über einen zu vermessenden Untergrund geführt und durch unterschiedliche räumliche Wellenlängen versucht, eingeschlossene Objekte zu detektieren. Dabei variiert der statische, kapazitive Sensor der Vorrichtung die Messfrequenz und damit die verwendete Wellenlänge, um in unterschiedlichen Tiefen (entsprechend unterschiedlicher Wellenlängen) nach eingeschlossenen Objekten zu suchen. So wird es ermöglicht, eine variable räumliche Auflösung der Messung zu erzeugen, um Änderungen der Dielektrizitätskonstanten (und somit Objekte) in Abhängigkeit von der Tiefe des untersuchten Gegenstandes zu detektieren.

Vorteile der Erfindung

Das erfindungsgemäße Verfahren zur Ortung von in einem Medium eingeschlossenen Objekten nutzt ein von einer kapazitiven Sensorvorrichtung erzeugtes Detektionssignal, beispielsweise ein in das zu untersuchende Medium eingreifendes elektrisches Feld, welches durch ein vorhandenes, eingeschlossenes Objekt verändert wird. Das im Medium eingeschlossenen Objekt beeinflusst das elektrische Feld zwischen den Elektroden der kapazitiven Sensorvorrichtung und verändert so die Kapazität des Meßkondensators, so dass beispielsweise über die Bestimmung des Verschiebestroms des Meßkondensators, bzw. durch Bestimmung einer mit diesem Verschiebestrom korrelierten Meßgröße, die Kapazitätsänderung aufgrund eines eingeschlossenen Objektes bestimmt werden kann. Eine genauere Analyse dieser Kapazitätsänderung ermöglicht dann die Extrahierung von Informationen über die Position des eingeschlossenen Objektes relativ zum messenden Sensor.

Das technische Problem welches die Detektionsgenauigkeit im Wesentlichen bestimmt, ergibt sich dadurch, dass die durch die dielektrischen, eingeschlossenen Objekte ermittelte Veränderung der Kapazität des Meßkondensators extrem klein ist. Daher sind zur Bestimmung der Kapazitätsänderung des Meßkondensators hochgenaue Präzisionsmessungen unumgänglich. Die Kapazitätsänderungen, welche es zu bestimmen gilt, liegen bei dielektrischen Einschlüssen wie beispielsweise Kunststoffrohren typischerweise im Subpikofarad-Bereich.

Diese kleinen Änderungen der Kondensatorkapazität resultieren bei einer an den Elektroden des Messkondensators anliegenden Wechselspannung von einem Volt und einer genutzten Meßfrequenz des Meßsignales von 100 KHz in Stromdifferenzen des Verschiebestroms von weniger als 1 Mikroampere. Derart geringe Stromdifferenzen sind insbesondere deswegen schwer zu messen, da sie einem Untergrundstrom überlagert sind, welcher unabhängig vom Vorhandensein oder Nichtvorhandensein des eingeschlossenen Objektes durch das einschließende Medium erzeugt wird.

Erfindungsgemäß ist im vorgeschlagenen Verfahren zur Ortung von in einem Medium eingeschlossenen Objekten vorgesehen, dass zur Auswertung des Detektionssignals eine Trennung des gemessenen Signals in Signalanteile ausgehend vom einschließenden Medium und Signalanteile ausgehend von dem im Medium eingeschlossenen Objekt vorgenommen wird. Durch die Vermessung einer Meßgröße, welche proportional ist zur Kapazitätsänderung des Meßkondensators in Betrag und Phase ist es möglich, Signalanteile, die aus oberflächennahen Regionen des einschließenden Mediums kommen gegenüber Signalanteilen, die von dem eingeschlossenen Objekt herrühren, zu diskriminieren.

Der Untergrundstrom wird dominiert von Verschiebeströmen, welche durch die oberflächennahen elektrischen Feldlinien in der direkten Umgebung der Kondensatorflächen fließen. Es handelt sich dabei also um Stromkomponenten, welche nur eine geringe Phasenverschiebung erfahren. Aufgrund ihrer charakteristische Phasenlage können damit erfindungsgemäß Signalanteile des Untergrundes von denen des eingeschlossenen Objektes unterschieden werden.

In vorteilhafter Weise wird zur Diskriminierung derjenigen Signalanteile im Meßsignal, die vom einschließenden Medium ausgehen, ein mathematisches Model für das einschließende Medium genutzt, welches eine Mehrzahl von Parametern (Anzahl n) hat, die unterschiedliche Materialien kennzeichnen. Diese Materialparameter sind in Form eines Kennfeldes im Messgerät gespeichert und können zur Auswertung des Meßsignals abgefragt werden.

In vorteilhafter Weise werden die Materialparameter für das Model des einschließenden Mediums durch Referenzmessungen an definierten Impedanzen gewonnen, so dass das erfindungsgemäße Verfahren vor einer Messung bereits "weiß", wie das Untergrundsignal von einigen typischen Materialien bzw. einer beliebigen Kombination dieser Materialien aussehen würde. Durch einen Vergleich des aktuell gemessenen Signals des einschließenden Mediums ist es mit dem erfindungsgemäßen Verfahren somit möglich sehr genau auf die Zusammensetzung des einschließenden Materials und damit auf seine dielektrischen Eigenschaften, beispielsweise seine Dielektrizitätskonstanten zu schließen.

Die Referenzmessungen an definierten Impedanzen können beispielsweise an bekannten Referenzmaterialien direkt nach der Fertigung eines erfindungsgemäßen Meßgerätes zur Durchführung des Verfahrens aufgenommen und im Gerät abgespeichert werden.

In vorteilhafter Weise besitzt das erfindungsgemäße Meßgerät darüber hinaus eine zuschaltbare Kalibrierungsvorrichtung mit der eine Referenzmessung an einer definierten Impedanz jederzeit durchgeführt werden kann. Als definierte Impedanz der Kalibrierungseinrichtung des Meßgerätes, kann beispielsweise auch ein Kurzschlußkreis der kapazitiven Sensorvorrichtung genutzt werden, so dass das Detektionssignal kurzgeschlossen wird und die Impedanz des Meßkreises lediglich durch die Impedanz des Wellenwiderstandes des Netzwerkes bestimmt wird.

Auch kann beispielsweise ein "offenes Ende" des Detektionsnetzwerkes zur Erzeugung einer definierten Impedanz genutzt werden. Über geräteinterne Schaltmittel kann das Detektionssignal auf einen entsprechenden Schaltkreis zur Messung der Referenzimpedanz umgeschaltet werden.

Zur Bestimmung des Materials des einschließenden Mediums führt das erfindungsgemäße Verfahren eine Interpolation durch, zwischen dem für das einschließende Medium gemessenen Materialmeßwert und den n Parametern des Models für das einschließende Medium, wie sie sich aus den Referenzmessungen ergeben haben. Über eine Vergleichsoptimierung können so die dielektrischen Eigenschaften des einschließenden Mediums in sehr guter Näherung bestimmt werden.

In vorteilhafter Weise werden zumindest vier Referenzwerte von Materialien zur Bestimmung des einschließenden Mediums eingemessen und in dem erfindungsgemäßen Messgerät abgespeichert. Aus den vier bekannten Dielektrizitätskonstanten dieser Referenzmaterialien kann auf die dann gemessenen Feldverzerrungen des Detektionssignals, welche durch den Untergrund erzeugt werden, mit hinreichender Genauigkeit geschlossen werden.

Aus der erfolgten Vergleichsoptimierung des gemessenen Signals für das einschließende Medium mit dem abgelegten Parameter-Model für ein einschließendes Medium läßt sich die Dielektrizitätskonstante des einschließenden Mediums errechnen. Ist die Dielektriztätskonstante des einschließenden Mediums bekannt, so kann mit Hilfe des erfindungsgemäßen Verfahrens aus der Phase des Signalanteils, der von dem eingeschlossenen Objekt herrührt, direkt auf die Tiefe des eingeschlossenen Objektes geschlossen werden.

In vorteilhafter Weise ermöglicht das erfindungsgemäße Verfahren somit eine quantitative Angabe der Einschlußtiefe des verborgenen Objektes. Ist die Phasenverschiebung des Meßsignals, welches von dem eingeschlossenen Objekt ausgeht bekannt und ist des Weiteren die Dielektrizitätskonstante des einschließenden Mediums bekannt, so kann daraus auf direktem Wege die Tiefeninformation gewonnen werden.

In darüber hinaus vorteilhafter Weise wird im erfindungsgemäßen Verfahren das Meßsignal als Funktion einer lateralen Verschiebung der das Detektionssignal generierenden Sensorvorrichtung gemessen und ausgewertet. Durch die Bewegung der kapazitiven Sensorvorrichtung über das einschließende Medium hinweg wird eine ortskorrelierte Signalauswertung ermöglicht. Dies bedeutet, dass der Einfluß eines verborgenen Objektes, beispielsweise einer elektrischen Leitung oder auch eines Kunststoffrohres in einer Wand, nicht nur an einer Meßstelle beobachtet und gemessen wird, sondern über mehrere Stellen hinweg verfolgt wird. Dadurch können mit bisher unerreichter Sicherheit und Zuverlässigkeit Objekte erkannt und lokalisiert werden.

Das erfindungsgemäße Verfahren wertet das Meßsignal bei einer Vielzahl von Meßfrequenzen aus, so dass beispielsweise Eindeutigkeitsprobleme des Meßsignales aufgrund von redundanten Frequenzmeßwerten behoben werden können.

Das erfindungsgemäße Verfahren läßt sich in vorteilhafter Weise in ein Meßgerät, insbesondere in ein Ortungsgerät zur Detektion von geschlossenen Objekten, beispielsweise in Wänden, Decken und/oder Böden einsetzen. Das entsprechende erfindungsgemäße Meßgerät ermöglicht darüber hinaus unter Einsatz von sehr leistungsfähigen digitalen Signalprozessoren eine Benutzeroberfläche, die eine sehr leichte Bedienung sowie eine unmißverständliche Ergebnisdarstellung der Ortung beinhaltet. Die bildliche Darstellung der zulässigen Bohrtiefe an jeder überfahrenen Stelle in einem Display des erfindungsgemäßen Meßgerätes gibt eine klare, zweifelsfreie Information ohne die Notwendigkeit einer vom Anwender geforderten Interpretation von Ton- oder Leuchtsignalen heutiger Ortungsgeräte des Standes der Technik.

Das erfindungsgemäße Meßgerät bzw. das zugrundeliegende erfindungsgemäße Verfahren ermöglicht dem Anwender eine genaue Lokalisierung eines in einem Medium eingeschlossenen Objektes in allen drei Dimensionen des Raumes. Darüber hinaus ist es möglich mit dem erfindungsgemäßen Verfahren Informationen über die Größe des eingeschlossenen Objektes zu erhalten.

Zeichnung

In der Zeichnung ist ein Ausführungsbeispiel des erfindungsgemäßen Verfahrens dargestellt, das in der nachfolgenden Beschreibung näher erläutert werden soll. Die Figuren der Zeichnung, deren Beschreibung sowie die auf das erfindungsgemäße Verfahren bzw. das dieses Verfahren nutzende Meßgerät gerichteten Ansprüche enthalten zahlreiche Merkmale in Kombination. Ein Fachmann wird diese Merkmale auch einzeln betrachten und so zu weiteren sinnvollen Kombinationen zusammenfassen.

Es zeigen:

Fig. 1     eine schematische Darstellung der dem erfindungsgemäßen Verfahren zugrundeliegenden Meßsituation,

Fig. 2     ein Blockschaltbild zur Impedanzmessung nach dem erfindungsgemäßen Verfahren,

Fig. 3     eine symbolische Darstellung der Temperaturabhängigkeit des ausgewerteten Messsignales M($\omega$),

Fig. 4    ein Blockdiagramm zur Darstellung von Verfahrensschritten zur Aufnahmen von Referenzwerten,

Fig. 5    ein Blockdiagramm zur Darstellung der Verfahrensschritten des erfindungsgemäßen Verfahrens.

Beschreibung eines Ausführungsbeispiels

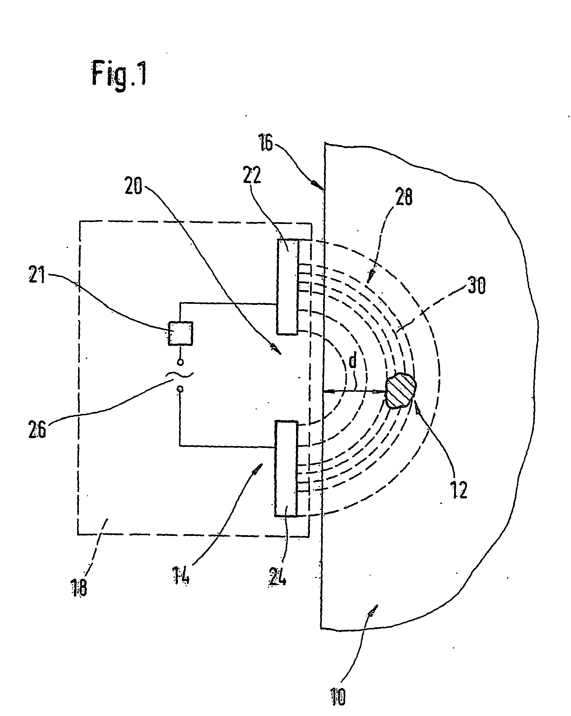

Fig. 1 zeigt die schematische Darstellung einer typischen Meßsituation zur Anwendung des erfindungsgemäßen Verfahrens bzw. zur Nutzung des erfindungsgemäßen Meßgerätes. Ein in einem Medium 10 eingeschlossenes Objekt 12 soll mit Hilfe einer kapazitiven Sensorvorrichtung 14 detektiert werden. Das eingeschlossene Objekt 12 befindet sich in einem Abstand d von einer Oberfläche 16 des einschließenden Mediums 10. Ein Meßgerät 18, welches u.a. den kapazitiven Sensor 14 enthält, wird auf die Oberfläche 16 des das Objekt 12 einschließenden Mediums 10 aufgebracht. Die kapazitive Sensorvorrichtung 14 besteht im Wesentlichen aus einem Meßkondensator 20 der zwei Kondensatorelektroden 22 bzw. 24 aufweist. Lediglich zur grafischen Verdeutlichung des Meßprinzips sind diese Kondensatorelektroden 22 und 24 in der Fig. 1 nebeneinander gezeichnet. In einer realen kapazitiven Sensorvorrichtung werden die Elektroden eines Meßkondensators im Wesentlichen parallel zueinander angeordnet sein. Die gewünschte Richtwirkung des elektrischen Feldes des Messkondensators 20 wird durch entsprechende Elektroden oder geometrische Mittel erzeugt.

Durch Anlegen einer elektrischen Spannung 26 wird ein elektrisches Feld 28 zwischen den Elektroden.22 bzw. 24 des Meßkondensators 20 des Meßgerätes 18 erzeugt. Legt man an die beiden Elektroden des Meßkondensators insbesondere eine Wechselspannung an, so fließt zwischen den Kondensatorelektroden entlang der das elektrische Feld 28 beschreibenden Feldlinien 30 ein sogenannter Verschiebestrom. Dieser Verschiebestrom I ist bei fester Spannung U um so größer, je geringer die Impedanz, d.h. der komplexe Widerstand Z des Meßkondensators 20 ist. Der Verschiebestrom I kann beispielsweise direkt über eine Amperemeter 21 oder auch über eine mit dem Verschiebestrom korrelierten Messgröße M, wie beispielsweise einem Spannungssignal gemessen werden.

Die Impedanz Z des Meßkondensators 20 wird im Wesentlichen bestimmt durch die zwischen den Kondensatorelektroden 22 bzw. 24 befindliche Materie. Wird ein solcher Meßkondensator 20 nun in die Nähe eines eingeschlossenen Objektes 12 gebracht, so ändert sich die Zusammensetzung der Materie in dem vom elektrischen Feld 28 überstrichenem Bereich. Insbesondere ergibt sich durch ein eingeschlossenes Objekt 12 eine geänderte Dielektrizitätskonstante $\varepsilon$ und damit eine geänderte Impedanz Z im Vergleich zu einem Medium 10 ohne eingeschlossenem Objekt 12.

Die durch das eingeschlossene Objekt 12 verursachte Änderung der Dielektrizitätskonstanten sowie die damit einhergehende Änderung der Impedanz Z des Meßkondensators entspricht einer geänderten Kapazität C des Meßkondensators.

Die Vergrößerung der Kapazität C des Meßkondensators 20 bzw. die daraus resultierende Vergrößerung des Verschiebestromes I zwischen den Kondensatorelektroden ist in Fig. 1 durch eine Vergrößerung der Feldliniendichte in der Darstellung des elektrischen Feldes 28 im Feldlinienbild verdeutlicht.

Das Einbringen eines Materials mit einer größeren Dielektrizitätskonstanten $\varepsilon$ als der entsprechenden Konstanten des umgebenden Mediums 10 in den vom kapazitiven Sensor 14 erzeugten Feldbereich 28 führt zu einer Verdichtung der Feldlinien, ein Objekt mit geringerer Dielektrizitätskonstante als das umgebende Material führt im Bereich des eingeschlossenen Objektes zu einer Reduzierung der Feldliniendichte.

Die Kapazitätsänderung aufgrund eines eingeschlossenen Objektes bzw. die Veränderung des Verschiebestromes am kapazitiven Sensor läßt sich an Hand von verschiedenen elektronischen Schaltungen messen und auswerten.

Beispielsweise kann die Eigenfrequenz eines Schwingkreises, welcher gebildet wird durch dem Meßkondensator und mindestens einer dazu in Reihe oder parallel geschalteten Spule genutzt werden. Nach Anregung durch einen kurzen elektrischen Impuls wird ein solcher Schwingkreis eine gedämpfte Schwingung seiner Resonanzfrequenz ausführen. Ein zeitaufgelöstes Vermessen dieser Resonanzfrequenz ermöglicht damit Rückschlüsse auf die beteiligten Kapazitäten und somit auf den Verschiebestrom.

Alternativerweise ist eine direkte Vermessung des Verschiebestroms durch den Meßkondensator bei Anlegen einer konstanten Wechselspannung fester Frequenz möglich.

Im erfindungsgemäßen Verfahren wird nicht direkt der elektrische Verschiebestrom I der kapazitiven Sensorvorrichtung 14 gemessen, sondern zur Auswertung des Detektionssignals wird eine frequenzabhängige Meßgröße M vermessen, die in nahezu linearer Abängigkeit zum Verschiebestrom der kapazitiven Sensorvorrichtung steht. Als Messgröße M wird bei dem erfindungsgemäßen Verfahren insbesondere eine mit der Verschiebestronm korrelierte elektrische Spannung vermessen. D.h. es gilt für die genutzte Meßgröße M:

$$M = M(\omega) = \alpha(\omega) + \beta(\omega) * I(\omega)$$

Die komplexe Meßgröße M(ω) wird in linearer Näherung des Verschiebestromes I(ω) des Meßkondensators ausgewertet. Dabei beschreibt α(ω) ein internes Übersprechen der Kondensatorelektroden und β(ω) berücksichtigt die Frequenzcharakteristik sowie Phasenverzerrungen auf den elektrischen Leitungen innerhalb der Auswerteschaltung und des Anpaßnetzwerk der kapazitiven Sensorvorrichtung.

α(ω) und β(ω) sind frequenzabhängige Konstanten, die unabhängig meßbar sind. Diese können beispielsweise durch eine Referenzmessung an definierten Impedanzen sehr genau bestimmt werden, so dass durch die Messung von M auch der Verschiebestrom gemessen wird.

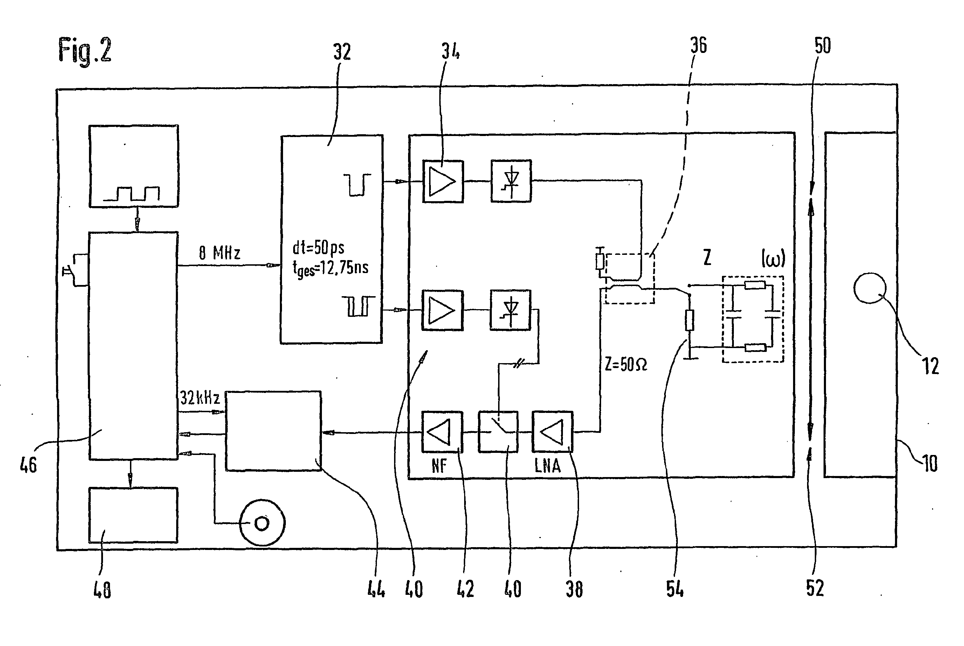

Fig. 2 zeigt ein Ausführungsbeispiel für eine Auswerteschaltung, wie sie im Rahmen des erfindungsgemäßen Verfahrens genutzt werden kann. Ein von einer Zeitbasis 32 gesteuerter Pulsgenerator 34 erzeugt einen zeitlich kurzen, spektral breiten Spannungsimpuls der über einen Wellenkoppler 36 in die kapazitive Sensorvorrichtung 14 eingespeist werden kann. Die Kapazität des Meßkondensators 20 und damit die Impedanz Z des Sensors sind abhängig vom dielektrischen Medium, welches das elektrische Feld der Kondensatorelektroden durchdringt.

Wird die kapazitive Sensorvorrichtung in die Nähe eines Objektes 12 gebracht so kommt es zu Feldverzerrungen des elektrischen Feldes aufgrund der geänderten Dielektrizitätskonstanten des Kondensatorfeldes. Die Impedanz Z wird dadurch geändert und ist über den Verschiebstrom beziehungsweise die abgeleitete Messgröße M(ω) messbar. Die Impedanz des kapazitiven Sensors wird als ein zeitabhängiges Spannungssignal U(t) durch den Richtkoppler 36 wieder ausgekoppelt, verstärkt und einer Abtasteinheit 40 zugeführt, in der der Betrag und die Phase des Messsignales bestimmt wird, was im Folgenden etwas genauer beschrieben wird.

An dem Punkt an dem der Messsensor 14 an die wellenwiderstandsrichtig abgestimmte Leitung angeschlossen wird, erfolgt eine mehr oder weniger ausgeprägte Reflexion der vom Generator über den Wellenkoppler 36 eingekoppelten Spannungen. Die Amplitude und Phase des an diesem Punkt reflektierten Signals spiegelt die Differenz der Impedanz Z des Sensors 14 und Leitungswellenwiderstand wieder und gestattet, auf Betrag und Phase der Impedanz des Sensors 14 zurückzuschließen und somit Betrag und Phase des Stromflusses durch den Sensor 14 zu bestimmen.

Die Bestimmung von Betrag und Phase des Stromflusses durch den Sensorkondensator 14 kann daher auf die Bestimmung von Betrag und Phase der am Anschlusspunkt des Sensors 14 reflektierten Spannung U zurückgeführt werden.

Die am Anschlusspunkt reflektierten Signale laufen über den Wellenkoppler zurück. Die durch das Übersprechen im Wellenkoppler 36 im Sendezweig induzierten Signale sind im Vergleich zu den direkt in Richtung des Detektionszweiges rücklaufenden Signalanteile vernachlässigbar. Die am Eingang der Detektionsschaltung anliegende Spannung V spiegelt, abgesehen von den geringfügigen Verlusten am Wellenkoppler 36 und der Laufzeitdifferenz, die am Anschlusspunkt des Sensors 14 reflektierte Spannung U wieder.

Die sich hinter dem Wellenkoppler 36 ergebende (in der Regel geringe) Spannung wird im Detektionszweig vorteilhaft zunächst in einem Hochfrequenzverstärker 38 verstärkt. Anschließend erfolgt eine Abtastung der Spannung zu definierten Zeitpunkten T. Die Zeitpunkte zu denen die Spannung gemessen wird, werden dabei durch einen Abtastpuls vorgegeben. Um eine Bestimmung der Phase der reflektierten Spannung relativ zur Phase der vom Generator erzeugten Spannung zu ermöglichen, ist es wichtig, dass der Generator des Sendesignals und der Generator des Abtastpulses phasenstarr gekoppelt sind. Dies wird durch Einsatz der Zeitbasis sichergestellt.

Die bei der Frequenz f am Abtastglied anliegenden Spannungsteile

$$V(f) = v(f) * \exp(i\varphi(f))$$

hängen gemäß der Beziehung

$$W(T) = \mathrm{Re}\left(\exp(i * 2\pi * f * T) * V(f)\right)$$

mit der hinter dem Abtastglied gemessenen Spannung W(T) zusammen. Ein Verschieben des Abtastzeitpunktes T gestattet somit auf Betrag und Phase der Spannung V bei der Frequenz f zurückzuschließen.

Die Spannung W wird vorteilhaft zunächst in einem Niederfrequenzverstärker verarbeitet um anschließend in einem Analog-Digital-Wandler erfasst zu werden. Durch Vermessung der Spannung W zu verschiedenen Zeitpunkten T ist es somit möglich, neben der Amplitude auch die Phase der reflektierten Spannungsteile zu ermitteln und somit auf Betrag und Phase der im Sensor fließenden Ströme zurückzuschließen.

Nach dem Analog-Digitalwandler 44 wird das Messsignal an einen Digitalen Signalprozessor 46 weitergeleitet.

Das DSP-Element 46 übernimmt sowohl weitere Signalverarbeitung als auch die Steuerung der Zeitbasis zur Erzeugung sowohl des Anregeimpulses als auch des Abtastimpulses. Das DSP-Element 46 ermöglicht es, die ausgewerteten Meßwerte, d.h. insbesondere die Tiefe des eingeschlossenen Objektes in der Wand, sowie dessen laterale Position relativ zum Meßsensor, in Echtzeit, d.h. noch während des Meßvorganges, auf einem Display 48 wiederzugeben. Auf diese Weise ist es mit dem erfindungsgemäßen Verfahren möglich bereits während das Gerät noch über beispielsweise eine Wand verfahren wird, einem Anwender im Display zu zeigen, wo und in welcher Tiefe der Wand Objekte eingeschlossen sind.

Zur Gewinnung der lateralen Ortsposition kann die kapazitive Meßvorrichtung in zwei entgegengesetzte Richtungen 50 bzw. 52 über das zu untersuchende Medium verfahren werden. Eine entsprechende Wegsensorik, die die aktuelle Position der kapazitiven Sensorvorrichtung an den digitalen Signalprozessor weiter reicht, ermöglicht die korrelierte Darstellung sowohl der Objekttiefe als auch der lateralen Position des Objektes.

Für das erfindungsgemäße Verfahren ist vorgesehen, dass zu Kalibrierungszwecken anstelle des Meßkondensators 20 eine definierte Referenzimpedanz 54 gemessen werden kann. Dazu besitzt die elektrische Schaltung zur Erzeugung und Auswertung des Detektionssignales Schaltmittel, die im Ausführungsbeispiel der Fig. 2 als symbolischer Schalter 56 dargestellt sind. Diese Schaltmittel ermöglichen es, den Anregungsimpuls nicht in den Meßkondensator 20, sondern zur Referenzimpedanz 54 umzuleiten. Diese definierte Referenzimpedanz 54 kann beispielsweise durch Kurzschließen der Signalleitung erzeugt werden. Eine andere Möglichkeit zur Realisierung einer geräteinternen definierten Impedanz ist beispielsweise ein "offenes Ende" der Signalleitung. Auf diese Weise besitzt das erfindungsgemäße Verfahren bzw. das erfindungsgemäße Meßgerät eine verfahrensinteme bzw. geräteinterne Kalibriervorrichtung mit der es den zugrunde liegenden Verfahren möglich ist, beispielsweise thermische Driften rechnerisch zu kompensieren.

So ist es insbesondere möglich durch die Kalibrierungsmessung an der definierten Impedanz 54 die durch das elektrische Netzwerk beeinflußten Konstanten $\alpha(\omega)$ und $\beta(\omega)$, die den Zusammenhang zwischen dem elektrischen Verschiebestrom I der kapazitiven Sensorvorrichtung und der gemessenen Größe $M(\omega)$ herstellen, zu bestimmen und auftretende Driften des Meßsignals $M(\omega)$ gegenüber dem Verschiebestrom $I(\omega)$ nach einer solchen Referenzmessung zu kompensieren.

Wesentliche Drifteffekte ergeben sich vor allem aus Temperaturänderungen und Alterungsprozessen der beteiligten Komponenten. So kann es beispielsweise auch zu zusätzlichen Zeitverzögerungen $\delta T$ zwischen dem Anregungs- und dem Abfrageimpuls kommen, was zu Verzerrungen des niederfrequenten Signales führen würde. Da solch eine zusätzliche Zeitverzögerung bei dem fouriertransformierten Messsignal $M(\omega)$ lediglich zu einem multiplikativen Faktor führt, lässt sich solch eine Drift der Abtastzeitpunktes noch relativ einfach aus dem Datensatz herausrechnen.

Des Weiteren kann die Pulsleistung sowie die spektrale Form speziell des Anregungsimpulses einer thermischen Drift unterworfen sein. Eine Drift der Frequenzcharakteristik des Hochfrequenzverstärkers läßt sich durch eine solche Referenzmessung ebenfalls kompensieren.

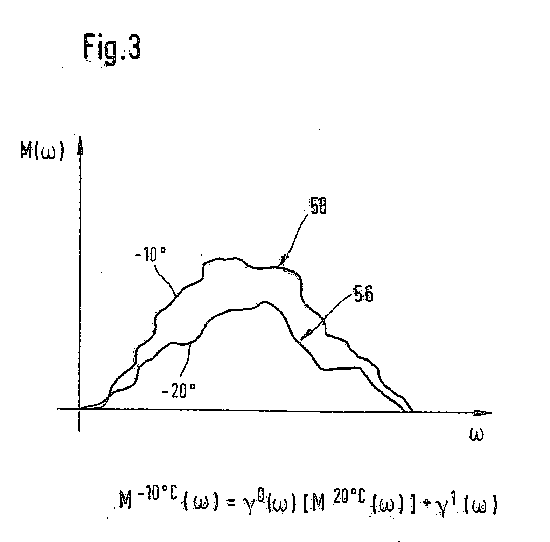

Zur Kompensation von Veränderungen im Gerät, also beispielsweise temperaturbedingten Driften wird eine lineare Korrekurfunktion für das Meßsignal benutzt. Abbildung 3 zeigt in schematischer Weise den Temperatureinfluß auf die Meßgröße $M(\omega)$. Die Meßgröße $M(\omega)$ unterliege einer starken temperaturabhängigen Änderung. So zeigt die Kurve 56 das frequenzabhänigge Messsignal $M(\omega)$ bei einer Temperatur von 20°C. Die ebenfalls dargestellte Messkurve 58 gibt das gemessen Signal $M(\omega)$ bei einer Temperatur von -10°C wieder. Dass der Auswertung des Meßsignals zugrundeliegende Verfahren geht nun von einer linearen Abhängigkeit der der beiden Messkurven bei unterschiedlicher Temperatur aus.

Zur Kompensation dieses Temperatureffektes werden daher zwei Korrekturfaktoren $\gamma0(\omega)$ sowie $\gamma1(\omega)$ um den Zusammenhang der unter Kalibrierungsbedingungen (z.B 20°C) gemessenen Meßgröße $M(\omega)$ zur Meßgröße M(w), wie sie sich bei einer Vorort-Messung einstellt, d h. es gilt beispielsweise:

$$M^{-10^\circ}(\omega) = \gamma0(\omega) * (M^{20^\circ}(\omega)) + \gamma1(\omega)$$

.

So wird beispielsweise für das erfindungsgemäße Verfahren die Meßgröße $M(\omega)$ für Kalibrierungsbedingungen d.h. bei definierter Temperatur und einer Referenzimpedanz, die beispielsweise durch Luftmessung, einen Kalibrierstein oder einen kurzgeschlossenen Sensor realisiert sein kann, gemessen.

Wird nun unter realen Betriebsbedingungen vor Ort eine Kalibriermessung mit der gleichen definierten Impedanz, also wiederum eine Luftmessung, eine Messung an einem Kalibrierstein bzw. eine Messung mit einem kurzgeschlossenen Sensor durchgeführt, so kann aus dem nun aufgrund von Drifteffekten veränderten Meßwert $M(\omega)$ auf die Korrekurkonstanten $\gamma0(\omega)$ und $\gamma1(\omega)$ geschlossen werden. Die so ermittelten Korrekturgrößen werden in einer Speichereinheit abgelegt, so dass sie bei einer späteren Signalauswertung abgerufen werden können.

Wird eine Kalibriermessung mit definierter Impedanz vor der eigentlichen Messung zur Ortung eines eingeschlossenen Objektes durchgeführt, lassen sich die mit der Kalibriermessung aktuell gewonnen Korrekurgrößen $\gamma0(\omega)$ und $\gamma1(\omega)$ auch zur Korrektur der Meßgröße $M(\omega)$ beim eigentlichen Meßvorgang nutzen.

Auf diese Weise ist es dem erfindungsgemäßen Verfahren möglich, Effekte, die in verfälschende Weise auf die zu verarbeitende Meßgröße einwirken, aus dem gemessenen Meßsignal herauszurechnen. Zu diesen allgemein als Drifteffekten bezeichneten Einflußnahmen auf die Meßgröße der kapazitiven Sensorvorrichtung gehören insbesondere Temperaturänderungen, Änderungen in der Feuchte, Änderungen, die hervorgerufen werden durch die Alterung von Bauteilen sowie auch Änderungen durch eine Variation der Versorgungsspannung des Meßgerätes. So kann beispielsweise das Ausführungsbeispiel eines erfindungsgemäßen Meßgerätes in Form eines handgehaltenen, batteriebetriebenen Meßgerätes ein Abfall der Batteriespannung noch über einen gewissen Zeitraum kompensiert werden, ohne dass diese Spannungsvariation zu einem deutlichen Einfluß auf die Qualität der Meßergebnisse führen würde.

Neben den beschriebenen Drifteffekten führen auch Exemplarstreuungen einzelner Bauteile zu einer unterschiedlichen Meßcharakteristik jedes einzelnen Meßgerätes, die über die beschriebene Korrekturfunktion kompensiert werden kann. Das erfindungsgemäße Verfahren ermöglicht somit die Kompensation von Drifteffekten oder auch von Exemplarstreuungen durch den Vergleich eines im Gerät gespeicherten Referenzsignales mit einem zum Meßzeitpunkt aufgenommenen Kalibriersignal. Durch diese Vergleichsmessung läßt sich eine lineare Korrekturgröße für das Meßsignal ermitteln, die es dem erfindungsgemäßen Verfahren ermöglicht die aktuell vor Ort gemessenen Meßwerte auf Referenzbedingungen zurück zurechnen.

Insbesondere ist es vorteilhaft eine Referenzmessung direkt nach Fertigung eines Gerätes, beispielsweise noch im Werk unter definierten Kalibrierungsbedingungen durchzuführen. Diese Messung kann dann später mit den eigentlichen Ortungsmessungen vor Ort abgeglichen werden.

Auch ist es möglich eine solche Referenzmessung, die ein definiertes Meßsignal $M(\omega)$ ergibt mittels eines "Master-Meßgerätes" durchzuführen und die für das "Master-Gerät" ermittelten Referenzwerte in Form eines Kennfeldes in weitere Meßgeräte direkt nach der Fertigung einzuspielen. In diesem Fall wäre es auch möglich beispielsweise Exemplarstreuungen der Richtcharakteristik des elektrischen Feldes des Meßkondensators der Einzelgeräte zu kompensieren.

Unterschiedliche Richtcharakteristiken aufgrund von mechanischen bzw. geometrischen Unterschieden der Kondensatorelektroden bzw. entsprechender Richtelektroden für das elektrische Meßfeld bedeuten Unterschiede bezüglich des detektierten Ortes für ein eingeschlossenes Objekt und machen die Vergleichbarkeit der mit verschiedenen Geräten gewonnen Meßdaten schwierig.

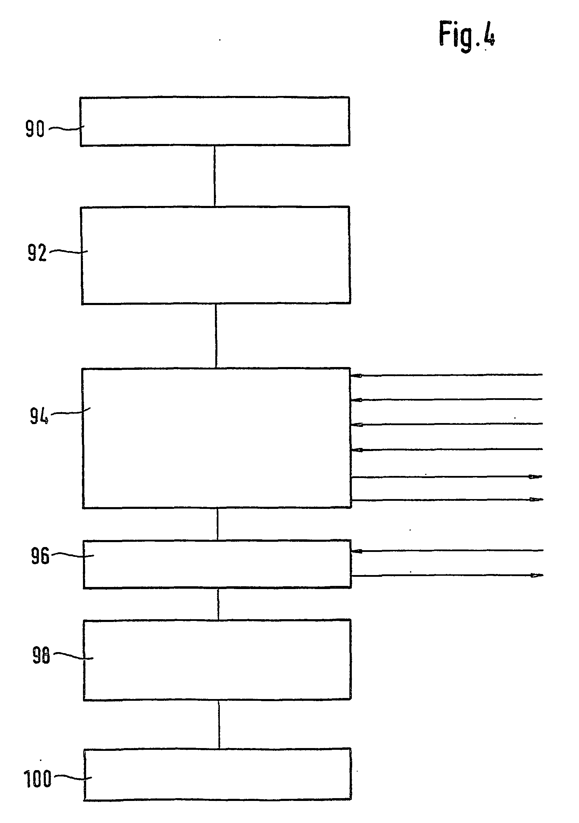

Fig. 4 zeigt an Hand eines Blockdiagrammes den Ablauf der Messung von Referenzwerten, die beispielsweise bereits direkt nach der Fertigung des erfindungsgemäßen Gerätes noch im Werk gemessen in einem Speicherelement des Meßgerätes abgelegt werden können. Im Schritt 90 wird eine Benutzerführung in ein Speicherelement des erfindungsgemäßen Meßgerätes eingeschrieben, die als animierte Filmsequenz auf einem Display des Meßgerätes wiedergebbar ist, und so dem Benutzer die zur Kalibrierung des Meßgerätes vor Ort durchzuführenden Verfahrensschritte näherbringt.

Im Verfahrensschritt 92 werden Referenzmessungen durchgeführt und im Gerät abgespeichert, die dazu dienen die geräteindividuellen Systemparameter zu bestimmen. Dazu wird das an definierten Impedanzen vermessene Meßsignal ausgewertet und eine Korrekturfunktion linearer Ordnung für jedes einzelne Meßgerät erstellt. Mit Hilfe dieser Korrekturfunktion ist es möglich Exemplarstreuungen, beispielsweise der mechanischen Ausführung der kapazitiven Sensorvorrichtung aus dem späteren vor Ort gemessenen Signal herauszurechnen.

In Verfahrensschritt 92 wird das Meßgerät auf verschiedene definierte Untergrundmaterialien eingemessen. Die Meßwerte dieser Referenzmessungen, beispielsweise an Luft, Beton, Metall sowie Ytong und weiterer verbreiteter Baumaterialien werden im Gerät abgespeichert. An Hand der bekannten Dielektizitätskonstanten dieser definierten Materialien lassen sich die durch das Detektionsnetzwerk bedingten Konstanten $\alpha(\omega)$ sowie $\beta(\omega)$, die den Zusammenhang zwischen dem dielektrischen Verschiebestrom der kapazitiven Sensorvorrichtung und dem zur Auswertung herangezogenen Meßsignal $M(\omega)$ bilden bestimmen. Durch eine solche Referenzmessung ist es also möglich, die Signalverzerrungen, die aufgrund von Phasenverzerrungen sowie der Frequenzcharakteristik der Signalleitungen, bzw. ein internes Übersprechen zwischen den Elektroden des Meßkondensators sich einstellen zu bestimmen. Auf diese Weise ist es möglich bei einer späteren Bestimmung des Meßsignals $M(\omega)$ vor Ort mit Hilfe der dann bekannten Koeffizienten $\alpha(\omega)$ bzw. $\beta(\omega)$ sehr genau auf den zugrunde liegenden dieelektrischen Verschiebestrom zurückzuschließen.

In Verfahrensschritt 92 werden ebenfalls Interpolationsparameter für das im Verfahren zugrundegelegte Model des einschließenden Mediums gewonnen. Das erfindungsgemäße Verfahren benutzt ein numerisches Model für das einschließende Medium, welches mehrere Materialparameter definierter Referenzmaterialien benutzt. Durch eine Vergleichsoptimierung zwischen dem vor Ort gemessenen Signal des umgebenden Mediums mit den Parametern des im Meßgerät abgelegten Models ist es möglich die dieelektrischen Eigenschaften des gemessenen umgebenden Mediums sehr genau zu bestimmen. Im Wesentlichen wird eine Interpolation der dem Model zugrundeliegenden Referenzparameter auf den vor Ort gemessenen Wert des einschließenden Mediums genutzt.

In Verfahrensschritt 96 wird eine Bestimmung eines Geometriefaktors der kapazitiven Sensorvorrichtung durchgeführt. Dazu wird ein Referenzsignal an einem definierten räumlich sehr begrenzten Referenzkörper, der in einem bekannten Medium eingeschlossen ist, vermessen. Aufgrund von mechanischen oder geometrischen Abweichungen der Elektroden der kapazitiven Sensorvorrichtung kann es zu Unterschieden in der Richtcharakteristik des Meßkondensators kommen, so dass eine Unsicherheit in der genauen Bestimmung des Ortes des eingeschlossenen Gegenstandes die Folge wäre. In Verfahrensschritt 96 werden daher Korrekturparameter zur Berücksichtigung der Abweichungen der Richtcharakteristik einzelner Meßgeräte für jedes einzelne Meßgerät ermittelt und in diesem Meßgerät abgelegt, so dass der auswertende Algorithmus diese Parameter abrufen und berücksichtigen kann.

Verfahrensschritt 98 der in Fig. 4 gezeigten Werkseinstellung von Referenzwerten für das erfindungsgemäße Verfahren bzw. das erfindungsgemäße Meßgerät ermittelt aus den durchgeführten Referenzmessungen Schwellwerte für die Objektdetektion. Mit Hilfe dieser Schwellwerte entscheidet der verarbeitende Algorithmus ob ein Objekt als detektiert oder nicht gilt. Diese Schwellwerte sind abhängig von der Meßgenauigkeit jedes einzelnen Gerätes sowie auch von entsprechenden Exemplarstreuungen.

Verfahrensschritt 100 der Fig. 4 bezeichnet das Ablegen zuvor ermittelten Einstellungen in einem Speicherelement des erfindungsgemäßen Meßgerätes. Mit Hilfe dieser abgelegten Referenzwerte und einer vor der eigentlichen Messung vor Ort durchzuführenden Kallibrierungsmessung ist es möglich, Störeinflüsse auf das Meßsignal weitgehendst auszuschalten, so dass ein extrem genauer Meßsensor realisiert werden konnte. Dabei ist besonders hervorzuheben, dass beispielsweise auch Kunststoffrohre mit diesem Meßsensor erkannt werden können. Wesentlichen Einfluß auf die erhöhte Leistungsfähigkeit des erfindungsgemäßen Meßgerätes bzw. des zugrundeliegenden erfindungsgemäßen Verfahrens hat die Aufnahme einer Vielzahl von Referenzwerten, die es ermöglichen Störeffekte bei der späteren Signalauswertung herauszurechnen.

Ein zentraler Punkt des erfindungsgemäßen Verfahrens ist es, das auszuwertende Meßsignal $M(\omega)$ in zwei Anteile aufzuspalten. Das Meßsignal $M(\omega)$ wird in einen Untergrundanteil $UG(\omega)$, der von dem einschließenden Medium herrührt und in einen Einschlußanteil $E(\omega)$, der aus einem eingeschlossenen Objekt resultiert, aufgeteilt. Einschlußsignal als auch Untergrundsignal sind aufgrund der Messung der Signalgröße $M(\omega)$ sowohl in Phase als auch Amplitude bekannt. Dabei ist zu beachten, dass das durch dielektrische Einschlüsse vermittelte Einschlußsignal $E(\omega)$ extrem klein ist. Kapazitätsänderungen, welche es aufgrund eines eingeschlossenen Objektes zu bestimmen gilt, liegen bei dieelektrischen Einschlüssen, wie beispielsweise Kunststoffrohren typischerweise im Subpikofarad-Bereich. Diese kleinen Änderungen resultieren bei einer angelegten Wechselspannung an den kapazitiven Sensor von beispielsweise einem Volt und einer Meßfrequenz von 100 KHz somit in Differenzen des Verschiebestroms von weniger als einem Mikroampere.

Aus diesem Grunde wird bei dem erfindungsgemäßen Verfahren eine Meßfrequenz im Gigahertzbereich genutzt, um selbst für geringste Kapazitätsänderungen aufgrund eines eingeschlossenen Objektes noch hinreichend große Änderungen im Meßsignal zu erzeugen. Das Untergrundsignal bezeichnet dabei das Signal, welches sich ohne Vorhandensein von Objekten ergebe. Es kann beispielsweise direkt neben einem Einschluß gemessen werden. Erfindungsgemäß wird ausgenutzt, dass das Untergrundsignal dominiert wird von Anteilen des Verschiebestromes welches durch die oberflächennahen Bereiche des elektrischen Meßfeldes erzeugt werden. Im Folgenden sei vorausgesetzt, dass das Untergrundsignal $UG(\omega)$ bekannt ist. Das Untergrundsignal $UG(\omega)$ setzt sich aus Verschiebeströmen $Iv(\omega)$ entlang der Feldlinien v des elektrischen Feldes des Meßkondensators zusammen. Die einzelnen Feldlinien v haben, wie beispielsweise der Fig. 1 zu entnehmen ist, unterschiedliche Längen. Man kann somit eine mittlere Feldlinienlänge L definieren, welche die Phase des Verschiebestromes angibt. Alle Phasen werden im Folgenden relativ zu dieser mittleren Phase angegeben. Bringt man einen dielektrischen Einschluß in die Nähe der Meßelektroden der kapazitiven Sensorvorrichtung, so verändert sich die Stromverteilung des Verschiebestromes. In der Praxis kann man voraussetzen, dass diese Änderung durch ein eingeschlossenes Objekt klein ist, d.h. es gilt:

$$E(\omega) \ll UG(\omega).$$

Man kann daher näherungsweise annehmen, dass der Einfluß des dielektrischen Einschlusses zu einer Verstärkung oder zu einer Schwächung des Verschiebestroms $Iv$ entlang einzelner Feldlinien v mit der Länge $Lv$ führt. D. h. es gilt:

$$Iv(\omega)(\text{mit Einschluss}) =$$

$$= \xi * Iv(\omega)(\text{Untergrund}) * \exp( i*2\pi/\lambda(\omega)*(Lv-L))$$

Hierbei bezeichnet $\xi$ einen reellen Verstärkungs- oder Schwächungsfaktor. Ist die Dielektrizitätskonstante $\varepsilon$ des Einschlusses größer als das $\varepsilon$ des umgebenden Mediums, so gilt $\xi > 1$. Die Kapazität des Meßkondensators wird erhöht und der Verschiebestrom wird vergrößert. Andernfalls gilt $\xi < 1$. Ist der Einschluß klein genug, so dass nur Feldlinien einer bestimmten Länge $Lv$ betroffen sind, so gilt näherungsweise:

$$E(\omega)= (\, Iv(\omega)(\text{mit Einschluss})- Iv(\omega)(\text{Untergrund}) \,)$$

$$= (1-\xi)^* \exp(\, i^*2\pi/\lambda(\omega)^*(Lv-L))^*Iv(\omega)(\text{Untergrund})$$

Ist Art des Einschlusses bekannt, beispielsweise ein metallischer Einschluß bzw. ein Hohlraum, so ist das Vorzeichen von $(1-\xi)$ bekannt.

Es gilt dann:

$$2\pi/\lambda(\omega)^*(Lv-L)= -\Phi(\omega)+\Psi(\omega)$$

.

D.h. aus einem Vergleich der Phase des Signals $E(\omega)$ mit der Phase des Untergrundsignals $UG(\omega)$ läßt sich an Hand der Beziehung:

$$\lambda(\omega)/2\pi \,^*(-\,\Phi(\omega)+\Psi(\omega)) +L = Lv$$

.

auf die Länge der betroffenen Feldlinien Lv zurück schließen. Die Länge der betroffenen Feldlinien hängt über einem Geometriefaktor $G\,(\omega,L)$ mit der Tiefe des Objektes zusammen.

In der Praxis führt das Gerät eine Mittelung über ein Ortsintervall [x,y] durch in dem überwiegend keine Einschlüsse vorhanden sind. So ergibt der räumliche Mittelwert von $MW\_M(\omega)$ einen brauchbaren Ansatzpunkt für die Untergrundkomponente. Das heisst, wenn die Messgröße $M(Xj,\omega)$ an n Orten Xj erfasst wurde, so ist zur Bestimmung der Untergrundkomponente für alle j über $M(Xj,\omega)$ zu summieren und mit 1/N zu normieren.

Als mögliche Erweiterung dieses grundlegenden Mittelungsverfahrens ist es vorteilhaft, Bereiche mit starken Signalveränderungen, das heisst, großen Abweichungen vom Mittelwert aus der Mittelwertbildung auszuschließen oder die Bildung des Mittelwerts durch die Bildung des Medians der Messdaten über den Ort zu ersetzen.

Es ist weiterhin möglich, anstelle der Mittelung über verschiedene Orte, im Speicher abgelegte tabellierte Untergrundsignale $MUG(\omega)$ heranzuziehen. Ist beispielsweise bekannt, dass es sich beim Untergrund um Beton handelt, so ist es möglich, im Speicher abgelegte Messwerte $MUGBETOn(\omega)$, wie sie sich für einen homogenen Betonblock ergeben als Untergrundsignal zu verwenden. Die Auswahl des abzuziehenden gespeicherten Untergrundsignals kann sowohl automatisch, z.B. anhand eines Vergleichs eines geschätzten Untergrundsignals mit verschiedenen tabellierten Untergründen, oder mittels eines vom Benutzer zu bedienenden Schalters erfolgen.

Für den Untergrund wird ein numerisches Model benutzt, welches mindestens vier Materialparameter, beispielsweise die Dieelektrizitätskonstanten von bekannten Werkstoffen benutzt. Dem Model zugrundegelegt ist das Reflexionsverhalten elektromagnetischer Signale an dieelektrischen Grenzschichten. Zur Ermittlung des Materials des gemessenen einschließenden Mediums wird die Gewichtung der Parameter im Model des einschließenden Mediums solange variiert, bis durch eine Vergleichsoptimierung in dem gemessenen Untergrundsignal möglichst nahekommendes Modelsignal rekonstruierbar ist. Aufgrund einer Interpolation der Parameter des Modelmediums kann somit auf die Dieelektrizitätskonstante des gemessenen einschließenden Mediums geschlossen werden. Bei Kenntnis der Dieelektrizitätskonstanten des einschließenden Mediums läßt sich aus der Phaseninformation des Meßsignales, welches ausgeht vom eingeschlossenen Objekt, auf die Tiefe des eingeschlossenen Objektes im einschließenden Medium zurückschließen.

Erfindungsgemäß ist bei dem beschriebenen Verfahren vorgesehen, dass die Schwelle zur Detektion eingeschlossener Objekte variierbar ist. Durch eine Empfindlichkeitseinstellung ist es möglich beispielsweise unrelevante Objekte insbesondere mit einer periodischen Struktur aus dem Meßsignal herauszurechnen, so dass dieses bei einer späteren optischen Anzeige der Meßergebnisse nicht mehr in Erscheinung trifft. Auch ist es durch das erfindungsgemäße Verfahren möglich, aufgrund eines gewählten speziellen Bereichs von Phasenverschiebungen des Meßsignals eine Beschränkung des Meßbereichs auf einen gewünschten Tiefenbereich zu erzeugen. Auf diese Weise läßt sich die Selektion eines speziellen begrenzten Tiefenbereichs realisieren. Die angezeigte Meßtiefe in der optischen Wiedergabe des Displays des erfindungsgemäßen Meßgerätes läßt sich zwischen verschiedenen Werten (beispielsweise 6 bzw. 10 cm) umschalten.

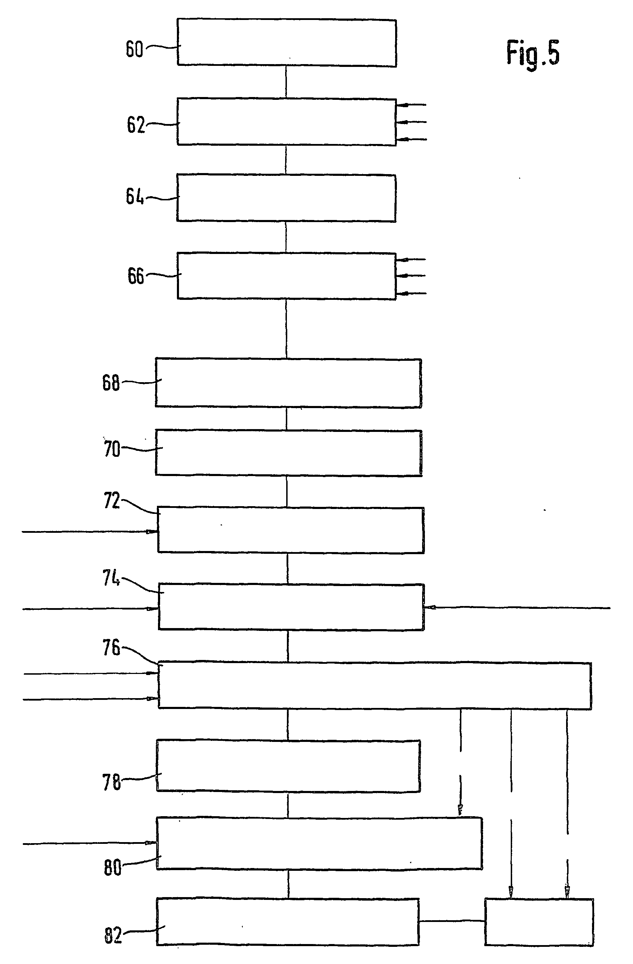

Abbildung 5 zeigt zur Übersicht ein Blockdiagramm zur Verdeutlichung der einzelnen Verfahrensschritte des erfindungsgemäßen Verfahrens.

Nach dem Einschalten des Gerätes in Schritt 60 erfolgt eine Systemabfrage für das Meßgerät. Die Systemabfrage 62 überprüft beispielsweise den Batteriestatus (Batteriespannung), den Innenwiderstand der Batterie sowie die vorliegende Temperatur. Anschließend wird in Schritt 64 eine Referenzmessung an einer definierten Impedanz durchgeführt. Dazu kann beispielsweise eine geräteinterne Referenzvorrichtung genutzt werden oder es kann auch eine Luftmessung durchgeführt werden. Diese Referenzmessung wird auch durchgeführt zur Bestimmung von EMV-Störungen, beispielsweise durch benachbarte Sendeanlagen. Solche EMV-Störungen lassen sich mit dem erfindungsgemäßen Verfahren später aus dem Meßsignal herausrechnen.

In Schritt 65 des erfindungsgemäßen Verfahrens erfolgt eine Wandkontaktüberprüfung, bei der durch Abfrage der entsprechenden Weggeber des erfindungsgemäßen Meßgerätes sichergestellt wird, dass das Meßgerät vorschriftsmäßig auf der zu untersuchenden Wand aufgesetzt ist. Alternativerweise kann der Wandkontakt auch durch die Auswertung des Messsignals der kapazitiven Sensorvorrichtung abgefragt werden. Ermittelt das Messgerät als umgebendes Medium Luft, so kann das Gerät nicht auf der Wand aufgesetzt sein.

Anschließend erfolgt der eigentliche Meßvorgang bei dem in Verfahrensschritt 68 Rohdaten der kapazitiven Sensorvorrichtung gemessen und an den digitalen Signalprozessor weitergeleitet werden. In Verfahrensschritt 70, der den Beginn der Auswertung des Meßsignals darstellt, werden Störsignale durch extern Störquellen aus den Rohdaten herausgerechnet. Anschließend erfolgt in Verfahrensschritt 72 eine erste Korrektur des Meßsignals aufgrund von Exemplarstreuungen. Dazu wird der werksseitig durch eine Referenzmessung ermittelte geräteindividuelle Systemparameter, d.h. die entsprechenden Korrekturkoeffizienten berücksichtigt und das Meßsignal in beschriebener, linearer Weise transformiert. Verfahrensschritt 74 beschreibt die Korrektur von geräteinternen Drifteffekten wie beispielsweise Temperatur- und Alterungseinflüsse. Zur Ermittlung einer entsprechenden Korrekturfunktion für das Meßsignal $M(\omega)$ wird im Verfahrensschritt 74 ein Vergleich zwischen einer im Werk durchgeführten und im Gerät abgespeicherten Referenzmessung an einer definierten Impedanz sowie dem Ergebnis der aktuellen Referenzmessung nach Verfahrensschritt 64 durchgeführt. Für das so aufgearbeitete Meßsignal $M^*(\omega)$ wird nun in Verfahrensschritt 76 die beschriebene Trennung in Signalanteilen vom einschließenden Medium und Signalanteilen, die vom eingeschlossenen Objekt herrühren durchgeführt. Über die im Gerät abgespeicherten Kenngrößen für Referenzmaterialien und ein entsprechendes mathematisches Modell für die Zusammensetzung des einschließenden Mediums wird das gemessene Wandmaterial durch Interpolation mit den Referenzwerten bestimmt. Insbesondere wird dem gemessenen Wandmaterial bzw. dem einschließenden Medium eine Dielektrizitätskonstante zugewiesen, die für die weitere Auswertung des Meßsignals benötigt wird.

Nach der Trennung des Detektionssignals in Signalanteile ausgehend vom einschließenden Medium bzw. ausgehend vom eingeschlossenen Objekt wird zur Bestimmung der genauen Ortsposition des eingeschlossenen Objektes in Verfahrensschritt 78 ein Geometriefaktor für die kapazitive Sensorvorrichtung berücksichtigt. Dieser Geometriefaktor berücksichtigt beispielsweise fertigungsbedingte geometrische Abweichungen in der Richtcharakteristik der kapazitiven Sensorvorrichtung. Diese geräteindividuellen Unterschiede können durch eine lineare Korrekturfunktion berücksichtigt und aus dem eigentlichen Meßsignal herausgerechnet werden. Unter Berücksichtigung der werksseitig eingestellten Schwellwerte für die Objektdetektion wird in Verfahrensschritt 80 durch die Signalverarbeitung die Entscheidung getroffen, ob ein Objekt geortet worden ist oder nicht. Im Fall einer positiven Entscheidung wird anschließend die Objektgröße, dessen relative Lage zum Meßgerät sowie die Objekttiefe des eingeschlossenen Objektes über die beschriebene Auswertung des Betrages und der Phase der Meßgröße $M^*(\omega)$ bestimmt. Insbesondere wird die Tiefe des eingeschlossenen Objektes in der Wand aus der Phase der Meßgröße $M^*(\omega)$ sowie der in Verfahrensschritt 76 ermittelten Dielektrizitätskonstanten des Rundmaterials ermittelt.

In Verfahrensschritt 82 wird das resultierende Meßergebnis in grafischer Form auf dem Display des Meßgerätes angezeigt. Dazu wird die Position des georteten Objektes relativ zur aktuellen Position des Meßgerätes, die Objektgröße sowie die Objekttiefe mittels symbolischer Darstellungen derart auf der Anzeigevorrichtung des Meßgerätes wiedergegeben, dass der Anwender ein Schnittbild der untersuchten Wand erhält.

Insbesondere ist es möglich auf dem Display des Meßgerätes beispielsweise auch in grafischer Weise eine zulässige Bohrtiefe anzuzeigen, die möglich ist, ohne das geortete Objekt beim Bohrvorgang zu treffen. Die Darstellung der Meßergebnisse auf dem Display des Meßgerätes erfolgt in Echtzeit, so dass noch während das Meßgerät über eine Wandabschnitt verfahren wird, das geortete Objekt lediglich mit einer kurzen zeitlichen Verzögerung auf dem Bildschirm des erfindungsgemäßen Meßgerätes dargestellt wird.

Bezugszeichenliste der Figuren 4 und 5

| 90 | Benutzerführung bei der Kalibrierung |
|---|---|
| 92 | Bestimmung der Systemparameter an Hand einer Referenzmessung, Berechnung der Koeffizienten zum Herausrechnen von Exemplarstreuungen |

(fortgesetzt)

| 94 | Einmessen des Gerätes auf verschiedenen Untergrundmaterialien, Eingangssignale: Luftmessung, Ytong-Messung, Betong-Messung, Metall-Messung; Ausgangsparameter: $\alpha$, $\beta$, Interpolationsparameter |
|---|---|
| 96 | Bestimmung der Geometriefaktoren des Sensors; Eingangsparameter: Messung des Metallstabes in Beton |
| 98 | Ermitteln der Schwellwerte für Objektdetektion |
| 100 | Ablegen der ermittelten Einstellungen im Speicher |
| 60 | Ein- bzw. Ausschalten des Gerätes |
| 62 | Überprüfung des Batteriestatus; Eingangsparameter: Temperatur, Batteriespannung, Innenwiderstand |
| 64 | Referenzmessung, Messung EMV-Störungen |
| 66 | Wandkontaktüberprüfung; Eingangsparameter: Weggeber 1, Weggeber 2, Messdaten |
| 68 | Rohe Daten vom Frontend |
| 70 | Berücksichtigung externer Störquellen |
| 72 | Korrektur von Frontend-Exemplarstreuungen; Eingangssignal: Systemparameter |
| 74 | Korrektur von Temperatur- und Alterungseinflüssen; Eingangsparameter: Referenzmessung im Werk, neue Referenzmessung |
| 76 | Trennung von Signalen der Wandoberfläche und Signalen der Wandeinschlüsse, Bestimmen des Wandmaterials; Eingangsparameter: Parameter, Interpolationsvektoren; Ausgangsparameter: Wandmaterial, Benutzerführung |
| 78 | Berücksichtigung der Geometriefaktoren des Sensors |
| 80 | Entscheidung Objekt ja/nein, Bestimmung der Objektgröße und Objekttiefe; Eingangsparameter: Schwellen, Wandmaterial |
| 82 | Anzeige des Ergebnisses, Eingangsparameter: Begrenzung der Anzeigetiefe |

**Patentansprüche**

1. Verfahren zur Ortung von in einem Medium eingeschlossenen Objekten, bei welchem mittels zumindest einer kapazitiven Sensorvorrichtung ein Detektionssignal erzeugt wird, welches in das zu untersuchende Medium eingreift, so dass durch eine Auswertung des Detektionssignals, insbesondere durch eine Impedanzmessung, Informationen über ein in dem Medium eingeschlossenes Objekt gewonnen werden, **dadurch gekennzeichnet, dass** zur Auswertung des Detektionssignals ein Algorithmus genutzt wird, der eine Trennung des gemessenen Signals in Signalanteile ausgehend vom einschließenden Medium und Signalanteile ausgehend von dem im Medium eingeschlossenen Objekt vornimmt, wobei zur Bestimmung des Signalanteils des Messsignals, welches vom einschließenden Medium ausgeht, ein Modell für das Material des einschließenden Mediums verwendet wird, das n Parameter aufweist.

2. Verfahren nach Anspruch 1, **dadurch gekennzeichnet, dass** die n Parameter des Modells für das einschließende Medium in Form eines Kennfeldes gespeichert und von einem Auswerte- Algorithmus abfragbar sind.

3. Verfahren nach Anspruch 1 oder 2, **dadurch gekennzeichnet, dass** die Parameter des Kennfeldes durch n Referenzmessungen an definierten Impedanzen gewonnen werden.

4. Verfahren nach Anspruch 3, **dadurch gekennzeichnet, dass** mindestens eine Referenzmessung an einem bekannten Referenzmaterial durchgeführt wird.

5. Verfahren nach Anspruch 3, **dadurch gekennzeichnet, dass** mindestens eine Referenzmessung durch Kurzschließen des Detektionssignals gewonnen wird.

6. Verfahren nach einem der vorhergehenden Ansprüche, **dadurch gekennzeichnet, dass** zur Bestimmung des Materials des einschließenden Mediums eine Interpolation eines für das einschließende Medium gemessenen Material-Messwertes mit den n Parameterwerten des Modells durchgeführt wird, und dass über eine Vergleichsoptimierung das Material des einschließenden Mediums näherungsweise bestimmt wird.

7.  Verfahren nach Anspruch 6, **dadurch gekennzeichnet, dass** aus der Interpolation eines für das einschließende Medium gemessenen Material-Messwertes mit den n Parameterwerten des Modells für das einschließende Medium ein Wert für die Dielektrizitätskonstante des das einschließenden Medium bildenden Materials ermittelt wird.

8.  Verfahren nach Anspruch 7, **dadurch gekennzeichnet, dass** unter Verwendung der ermittelten Dielektrizitätskonstante des Materials des einschließenden Mediums eine Tiefeninformation für das im Medium eingeschlossene Objekt gewonnen wird.

9.  Verfahren nach Anspruch 8, **dadurch gekennzeichnet, dass** die Tiefeninformation für das eingeschlossene Objekt mit Hilfe der Dielektrizitätskonstanten des einschließenden Mediums aus einer Phasenmessung desjenigen Signalanteils des Messsignals gewonnen wird, der von dem im Medium eingeschlossenen Objekt ausgeht.

10. Verfahren nach einem der vorhergehenden Ansprüche, **dadurch gekennzeichnet, dass** das Messsignal als Funktion einer lateralen Verschiebung der das Detektionssignal generierenden Sensorvorrichtung gemessen und ausgewertet wird.

11. Verfahren nach einem der vorhergehenden Ansprüche, **dadurch gekennzeichnet, dass** das Messsignal als Funktion von mehr als einer Messfrequenz gemessen und ausgewertet wird.

12. Handgehaltenes Ortungsgerät, zur Ortung von in einem Medium eingeschlossenen Objekten mit einer Sensorvorrichtung, mit Mitteln zur Erzeugung eines Detektionssignals für diese Sensorvorrichtung, ferner mit einer Steuer- und Auswerteeinheit zur Ermittlung von Messwerten aus dem Detektionssignal, sowie mit einer Ausgabevorrichtung für die ermittelten Messwerte, zur Durchführung eines Verfahrens nach einem der Ansprüche 1 bis 11.

13. Messgerät nach Anspruch 12, **dadurch gekennzeichnet, dass** das Messgerät zumindest eine interne Kalibrierungsvorrichtung für ein Messsignal aufweist.

14. Messgerät nach Anspruch 13, **dadurch gekennzeichnet, dass** die Kalibrierungsvorrichtung die Messung zumindest eine definierten Impedanz ermöglicht.

15. Messgerät nach Anspruch 13 oder 14, **dadurch gekennzeichnet, dass** die Kalibrierungsvorrichtung einen Kurzschlussschalter zur Erzeugung einer definierten Impedanz aufweist.

16. Messgerät nach Anspruch 13, 14 oder 15, **dadurch gekennzeichnet, dass** das Messgerät Schaltmittel zur zeitweisen Aktivierung der Kalibrierungsvorrichtung aufweist.

17. Messgerät nach einem der Ansprüche 13 bis 16, **dadurch gekennzeichnet, dass** das Messgerät Mittel zur Speicherung von Materialdaten, insbesondere von Dielektrizitätskonstanten, bekannter Materialien aufweist.

18. Messgerät nach einem der Ansprüche 12 bis 17, **dadurch gekennzeichnet, dass** das Messgerät Mittel aufweist, die es ermöglichen, errechnete Messergebnisse, insbesondere die Lage und oder die Tiefe eines in einem Medium eingeschlossenen Objektes ortsaufgelöst auf einer Anzeigevorrichtung des Messgerätes darzustellen.

**Claims**

1.  Method for locating objects enclosed in a medium, in which at least one capacitive sensor apparatus is used to generate a detection signal which enters the medium to be analysed, with the result that information relating to an object enclosed in the medium is obtained by evaluating the detection signal, in particular by means of an impedance measurement, **characterized in that** an algorithm is used to evaluate the detection signal, which algorithm separates the measured signal into signal components coming from the enclosing medium and signal components coming from the object enclosed in the medium, a model for the material of the enclosing medium being used to determine that signal component of the measurement signal which comes from the enclosing medium, which model has n parameters.

2. Method according to Claim 1, **characterized in that** the n parameters of the model for the enclosing medium are stored in the form of a family of characteristics and can be queried by an evaluation algorithm.

3. Method according to Claim 1 or 2, **characterized in that** the parameters of the family of characteristics are obtained by means of n reference measurements at defined impedances.

4. Method according to Claim 3, **characterized in that** at least one reference measurement is carried out on a known reference material.

5. Method according to Claim 3, **characterized in that** at least one reference measurement is obtained by short-circuiting the detection signal.

6. Method according to one of the preceding claims, **characterized in that**, in order to determine the material of the enclosing medium, a material measured value measured for the enclosing medium is interpolated with the n parameter values of the model, and **in that** the material of the enclosing medium is approximately determined by comparison optimization.

7. Method according to Claim 6, **characterized in that** a value of the dielectric constant of the material forming the enclosing medium is determined from the interpolation of a material measured value measured for the enclosing medium with the n parameter values of the model for the enclosing medium.

8. Method according to Claim 7, **characterized in that** an item of depth information for the object enclosed in the medium is obtained by using the determined dielectric constant of the material of the enclosing medium.

9. Method according to Claim 8, **characterized in that** the depth information for the enclosed object is obtained from a phase measurement of that signal component of the measurement signal which comes from the object enclosed in the medium with the aid of the dielectric constant of the enclosing medium.

10. Method according to one of the preceding claims, **characterized in that** the measurement signal is measured and evaluated as a function of a lateral displacement of the sensor apparatus which generates the detection signal.

11. Method according to one of the preceding claims, **characterized in that** the measurement signal is measured and evaluated as a function of more than one measurement frequency.

12. Handheld locating device for locating objects enclosed in a medium, having a sensor apparatus, having means for generating a detection signal for this sensor apparatus, also having a control and evaluation unit for determining measured values from the detection signal, and having an output apparatus for the measured values determined, for carrying out a method according to one of Claims 1 to 11.

13. Measuring device according to Claim 12, **characterized in that** the measuring device has at least one internal calibration apparatus for a measurement signal.

14. Measuring device according to Claim 13, **characterized in that** the calibration apparatus makes it possible to measure at least one defined impedance.

15. Measuring device according to Claim 13 or 14, **characterized in that** the calibration apparatus has a short-circuiting switch for generating a defined impedance.

16. Measuring device according to Claim 13, 14 or 15, **characterized in that** the measuring device has switching means for temporarily activating the calibration apparatus.

17. Measuring device according to one of Claims 13 to 16, **characterized in that** the measuring device has means for storing material data, in particular dielectric constants, of known materials.

18. Measuring device according to one of Claims 12 to 17, **characterized in that** the measuring device has means which make it possible to display calculated measurement results, in particular the position and/or the depth of an object enclosed in a medium, in a spatially resolved manner on a display apparatus of the measuring device.

**Revendications**

1. Procédé de localisation d'objets inclus dans un milieu, selon lequel un signal de détection est généré au moyen d'au moins un dispositif de détection capacitif, lequel signal pénètre dans le milieu à analyser de manière à obtenir des informations sur un objet inclus dans le milieu par le biais d'une interprétation du signal de détection, notamment par une mesure d'impédance, **caractérisé en ce que** l'interprétation du signal de détection fait appel à l'utilisation d'un algorithme qui effectue une séparation du signal mesuré en parties de signal sortant du milieu d'inclusion et en parties de signal sortant de l'objet inclus dans le milieu, un modèle du matériau du milieu d'inclusion, lequel présente n paramètres, étant utilisé pour déterminer la partie de signal du signal de mesure qui sort du milieu d'inclusion.

2. Procédé selon la revendication 1, **caractérisé en ce que** les n paramètres du modèle pour le milieu d'inclusion sont enregistrés sous la forme d'un diagramme caractéristique et peuvent être interrogés par un algorithme d'interprétation.

3. Procédé selon la revendication 1 ou 2, **caractérisé en ce que** les paramètres du diagramme caractéristique sont obtenus par n mesures de référence sur des impédances définies.

4. Procédé selon la revendication 3, **caractérisé en ce qu'**au moins une mesure de référence est effectuée sur un matériau de référence connu.

5. Procédé selon la revendication 3, **caractérisé en ce qu'**au moins une mesure de référence est obtenue en court-circuitant le signal de détection.

6. Procédé selon l'une des revendications précédentes, **caractérisé en ce que** pour déterminer le matériau du milieu d'inclusion, une interpolation d'une valeur mesurée de matériau, mesurée pour le milieu d'inclusion, est effectuée avec les n valeurs de paramètre du modèle, et **en ce que** le matériau du milieu d'inclusion est déterminé approximativement par le biais d'une optimisation comparative.

7. Procédé selon la revendication 6, **caractérisé en ce qu'**une valeur pour la constante diélectrique du matériau formant le milieu d'inclusion est déterminée à partir de l'interpolation d'une valeur mesurée de matériau, mesurée pour le milieu d'inclusion, avec les n valeurs de paramètre du modèle pour le milieu d'inclusion.

8. Procédé selon la revendication 7, **caractérisé en ce qu'**une information de profondeur pour l'objet inclus dans le milieu est obtenue en utilisant la constante diélectrique déterminée du matériau du milieu d'inclusion.

9. Procédé selon la revendication 8, **caractérisé en ce que** l'information de profondeur pour l'objet inclus est obtenue à l'aide de la constante diélectrique du milieu d'inclusion à partir d'une mesure de la phase de la partie de signal du signal de mesure qui sort de l'objet inclus dans le milieu.

10. Procédé selon l'une des revendications précédentes, **caractérisé en ce que** le signal de mesure est mesuré et interprété en tant que fonction d'un décalage latéral du dispositif de détection qui génère le signal de détection.

11. Procédé selon l'une des revendications précédentes, **caractérisé en ce que** le signal de mesure est mesuré et interprété en tant que fonction de plus d'une fréquence de mesure.

12. Appareil de localisation portatif pour localiser des objets inclus dans un milieu avec un dispositif de détection, comprenant des moyens pour générer un signal de détection pour ce dispositif de détection, comprenant en outre une unité de commande et d'interprétation pour déterminer des valeurs mesurées à partir du signal de détection ainsi qu'un dispositif de sortie pour les valeurs mesurées déterminées, pour mettre en oeuvre un procédé selon l'une des revendications 1 à 11.

13. Appareil de mesure selon la revendication 12, **caractérisé en ce que** l'appareil de mesure présente au moins un dispositif de calibrage interne pour un signal de mesure.

14. Appareil de mesure selon la revendication 13, **caractérisé en ce que** le dispositif de calibrage permet la mesure d'au moins une impédance définie.

**15.** Appareil de mesure selon la revendication 13 ou 14, **caractérisé en ce que** le dispositif de calibrage présente un commutateur à court-circuit pour générer une impédance définie.

**16.** Appareil de mesure selon la revendication 13, 14 ou 15, **caractérisé en ce que** l'appareil de mesure présente des moyens de commutation pour activer temporairement le dispositif de calibrage.

**17.** Appareil de mesure selon l'une des revendications 13 à 16, **caractérisé en ce que** l'appareil de mesure présente des moyens pour enregistrer des données de matériau, notamment les constantes diélectriques de matériaux connus.

**18.** Appareil de mesure selon l'une des revendications 12 à 17, **caractérisé en ce que** l'appareil de mesure présente des moyens qui permettent de représenter les résultats de mesure calculés sur un dispositif d'affichage de l'appareil de mesure avec résolution de la localisation, notamment la position et/ou la profondeur d'un objet inclus dans un milieu.

## Fig.1

Fig.2

32  34  36  50

dt=50ps
t$_{ges}$=12,75ns

8 MHz

Z  (ω)

Z=50Ω

32kHz

NF    LNA

46    40

44  40  42  40  38  54  52

48

12

10

EP 1 478 948 B1

Fig.3

$$M^{-10°C}(\omega) = \gamma^0(\omega)\,[M^{20°C}(\omega)] + \gamma^1(\omega)$$

EP 1 478 948 B1

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6249113 B1
- WO 9404932 A
- US 6198271 B1
- WO 9830921 A